# EUROPEAN PATENT APPLICATION

(11) **EP 4 708 003 A1**
(43) Date of publication of application: **11.03.2026**
(21) Application number: 24876334.4
(22) Date of filing: 11.09.2024
(51) Int. Cl.: G06F 3/0354

(54) **PEN TIP ASSEMBLY, PREPARATION METHOD THEREFOR AND COMPOSITE MATERIAL THEREOF, AND STYLUS PEN**

(30) Priority: 13.10.2023 CN 202311331865
(71) Applicant: Huawei Technologies Co., Ltd., Shenzhen, Guangdong 518129 (CN)
(72) Inventor: FENG, Kun, Shenzhen, Guangdong 518129 (CN); DENG, Shuang, Shenzhen, Guangdong 518129 (CN); HU, Pengpeng, Shenzhen, Guangdong 518129 (CN)
(74) Representative: Maiwald GmbH
(86) International application number: PCT/CN2024/118107
(87) International publication number: WO 2025/077514

(57) **Abstract**

This application provides a tip assembly and a preparation method therefor, a composite material, and a stylus. The tip assembly includes a mounting housing and a tip. The mounting housing is an insulated housing and is provided with a first end surface and a first mounting hole. The first mounting hole penetrates through the housing from the first end surface. The tip is made of conductive plastic. The tip includes a writing surface and a second end surface that are disposed opposite to each other. The writing surface is a convex arc surface used for writing. The second end surface is disposed facing the first end surface and is connected to the first end surface. The tip blocks the first mounting hole, and hardness of the tip is less than hardness of the mounting housing. The tip assembly can increase a signal value of coupling between the tip and a touchscreen, to improve positioning accuracy in a writing process, and improve wear resistance of the tip.

## Description

### CROSS-REFERENCE TO RELATED APPLICATIONS

This application claims priority to Chinese Patent Application No. 202311331865.1, filed with the China National Intellectual Property Administration on October 13, 2023 and entitled "TIP ASSEMBLY AND PREPARATION METHOD THEREFOR, COMPOSITE MATERIAL, AND STYLUS", which is incorporated herein by reference in its entirety.

### TECHNICAL FIELD

This application relates to the field of electronic devices, and specifically, to a tip assembly of a stylus and a preparation method therefor, a composite material, and a stylus.

### BACKGROUND

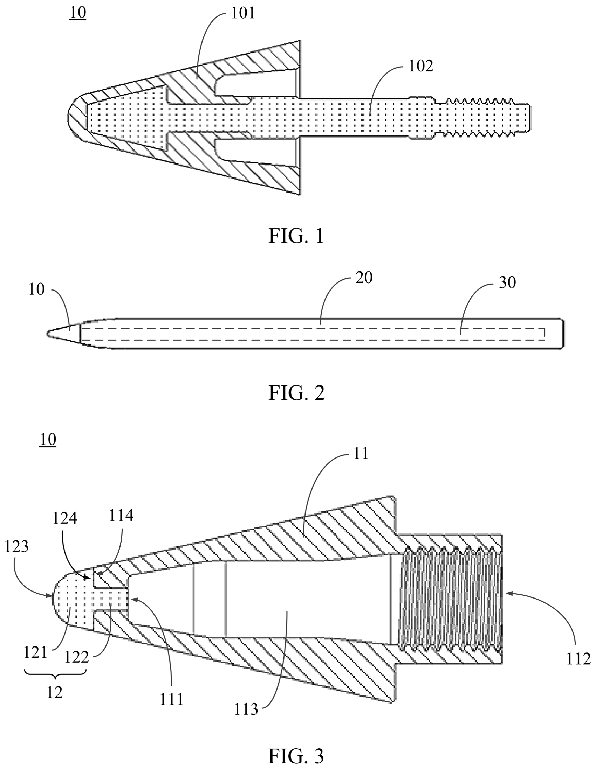

When a stylus is used for writing or drawing on a screen, a tip transmits a highfrequency current. The touchscreen receives a current signal transmitted from the tip, and a processor processes the current signal received by the screen, to learn of coordinates of the tip on the screen. FIG. 1 is an existing diagram of a structure of a tip assembly of a stylus. As shown in FIG. 1, the tip assembly of the stylus includes an outer coating layer 101 and an inner conductive electrode 102. The outer coating layer 101 is made of non-conductive plastic, and the inner conductive electrode 102 is a metal electrode. A signal between the inner conductive electrode 102 and the touchscreen needs to pass through the outer coating layer 101. In this structure, the outer coating layer 101 is usually made of a soft material with low hardness, to ensure a sufficiently large value of a signal of coupling. If the outer coating layer 101 is thick, a small quantity of charges is generated by coupling to the touchscreen through the outer coating layer 101. As a result, a signal value is small. Consequently, accurate positioning cannot be implemented, and writing is insensitive. If the coating layer is thin, wear resistance of the coating layer is poor, and sliding damping force generated between the tip assembly and the touchscreen is decreased. As a result, a service life and writing experience of the tip assembly are affected.

### SUMMARY

This application provides a tip assembly and a preparation method therefor, a composite material, and a stylus, to enable a tip to have high positioning accuracy and high wear resistance.

According to a first aspect, this application provides a tip assembly of a stylus. The tip assembly is used in the stylus, and the stylus is an input apparatus of an electronic device. The tip assembly includes a mounting housing and a tip. The mounting housing is an insulated housing, and is provided with a first end surface and a first mounting hole. The first mounting hole penetrates through the housing from the first end surface. The tip is made of conductive plastic. The tip includes a writing surface and a second end surface that are disposed opposite to each other. The writing surface is a convex arc surface used for writing. The second end surface is disposed facing the first end surface and is connected to the first end surface. The tip blocks the first mounting hole, and hardness of the tip is less than hardness of the mounting housing.

In the tip assembly in this application, the mounting housing is an insulated housing, has high hardness, and can function as a support frame. The first end surface of the mounting housing is connected to the second end surface of the tip, to fasten the tip to the mounting housing. The tip is softer than the mounting housing, and can be used for writing. The tip is prepared and formed by using conductive plastic, and has a conductive property. During writing, a writing surface is directly in contact with the touchscreen, charges can be directly conducted to the touchscreen, and no signal value loss occurs. In this way, better positioning can be implemented in a writing process. In addition, because the conductive plastic tip may be in direct contact with the touchscreen for writing, a thickness of the tip is not limited, and a high thickness setting can be implemented, to improve wear resistance of the tip.

In an optional implementation, both the first end surface and the second end surface are planes, and the first end surface and the second end surface are connected to each other through pressing. In this structure, the first end surface is tightly attached or bonded to the second end surface.

In an optional implementation, the first end surface and the second end surface each include a plane segment and a curved surface segment, and the first end surface and the second end surface are engaged with each other through the plane segments and the curved surface segments. In another optional low-stress connection structure, both the first end surface and the second end surface are curved surfaces, the first end surface is a concave curved surface, and the second end surface is a convex curved surface connected to the concave curved surface through fitting. Alternatively, the first end surface is a convex curved surface, and the second end surface is a concave curved surface connected to the convex curved surface through fitting. In another optional low-stress connection structure, the first end surface is a first wave-shaped curved surface, and the second end surface is a second wave-shaped curved surface fitting the first wave-shaped curved surface. In the foregoing possible low-stress connection structures, the first end surface and the second end surface are engaged with and abut against each other, so that an abutting area between the first end surface and the second end surface can be increased, and connection stability between the writing part and the mounting housing can be improved. Similarly, in this connection manner, the abutting area between the first end surface and the second end surface is increased, and binding strength between the first end surface and the second end surface is improved.

In an optional implementation, the tip includes a writing part and a connection part. The connection part is connected to the writing part. The connection part penetrates through the first mounting hole and is electrically connected to a stylus core of the stylus. The writing part is disposed outside the mounting housing. Disposing the connection part can implement fastening between the tip and the mounting housing, and improve connection strength between the tip and the mounting housing.

In an optional implementation, the connection part includes a connection pillar. The connection pillar and the first mounting hole are in interference fit, are bonded to each other, or are in threaded connection. The connection pillar is prepared by using conductive plastic, and has elasticity. The connection pillar and the first mounting hole may be in interference fit connection, may be bonded to each other, or may be in threaded connection. The foregoing connection manner may facilitate assembly and disassembly of the tip.

In an optional implementation, the connection part includes a connection pillar and a positioning member connected to the connection pillar, and the positioning member is connected to a partial housing of the mounting housing. Adding a positioning member can improve reliability of a connection between the connection pillar and the first mounting hole, and avoid detachment between the tip and the mounting housing. In an optional implementation, the positioning member includes a positioning sheet. The positioning sheet is fastened to an end that is of the connection pillar and that is away from the writing part, and is disposed outside the first mounting hole. An outer diameter of the positioning sheet is greater than a diameter of the first mounting hole. In the connection structure, the connection pillar may be disposed in the first mounting hole. One end of the connection pillar is connected to the writing part, and the other end of the connection pillar is connected to the positioning sheet. The positioning sheet is disposed outside the first mounting hole. The outer diameter of the positioning sheet is greater than the diameter of the first mounting hole, so that the connection part can be fastened in the first mounting hole, to enhance connection of the connection part and avoid detachment between the connection part and the first mounting hole.

In an optional implementation, the positioning member is a positioning ring. The positioning ring is an annular protrusion formed by protruding outward from a part of a circumferential side surface of the connection pillar. An inner wall of the first mounting hole is provided with an annular groove that matches the annular protrusion. The annular protrusion is disposed in the annular groove and is connected to the annular groove through fitting. In the connection manner, the annular protrusion serving as the positioning ring is connected, through fitting, to the annular groove formed on the inner wall of the first mounting hole, to provide resistance to avoid movement of the connection pillar, so as to implement an anti-detachment setting of the connection part, and improve the connection strength between the tip and the mounting housing.

In an optional implementation, the connection part is of a cylindrical structure, a truncated cone structure, or a combination structure of a cylinder and a truncated cone. When the connection part is of a truncated cone structure, an outer diameter of the connection part gradually decreases in a direction from the writing part to the connection part.

In an optional implementation, Shore hardness of the tip is 75A to 95A, conductivity of the tip is 10^{2.5} Ω to 10^{7.9} Ω, and damping force of the tip is 0.5 N to 1.5 N.

In an optional implementation, the mounting housing has a second mounting hole. The first mounting hole and the second mounting hole are provided opposite to each other, and a cavity is provided between the first mounting hole and the second mounting hole. Both the first mounting hole and the second mounting hole communicate with the cavity. The first mounting hole is configured to fasten the connection part, and the second mounting hole may be configured to connect to a stylus body of the stylus. The stylus core may be connected to the connection part in the cavity.

In an optional implementation, the mounting housing is of a conical structure. The diameter of the first mounting hole is less than a diameter of the second mounting hole. An appearance of the mounting housing is a conical shape, to facilitate writing and avoid blocking.

In an optional implementation, a material forming the tip includes a base material and a conductive agent. A mass proportion of the conductive agent in the tip is 10 wt% to 30 wt%. The base material includes at least one of a thermoplastic polyurethane elastomer, an acrylonitrile butadiene styrene copolymer, and polyformaldehyde. The conductive agent includes at least one of polyethylene terephthalate conductive fiber, carbon fiber, super conductive carbon black, a carbon nanotube, and indium tin oxide.

In an optional implementation, a material forming the mounting housing includes polycarbonate, or a combination of polycarbonate and an acrylonitrile butadiene styrene copolymer.

In an optional implementation, a connection surface between the tip and the mounting housing is a fusion-bonding surface. Fusion-bonding can avoid using an additional connection structure, for example, a bonding agent or a processed thread. In addition, connection through fusion-bonding helps the tip and the mounting housing form an integrated connection structure, and improve connection strength.

According to a second aspect, this application provides a preparation method for a tip assembly of this application. The method includes:
placing, in a first injection mold, a first injection molding material used to form a first mechanical part, and forming the first mechanical part through injection molding at a first temperature; and
placing, in the second injection mold, the first mechanical part and a second injection molding material used to form a second mechanical part, and forming the tip assembly through injection molding at a second temperature, where the first mechanical part is one of the tip or the mounting housing, the second mechanical part is the other of the tip or the mounting housing, a melting point of the first injection molding material is 30°C to 80°C higher than a melting point of the second injection molding material, and the second injection molding temperature is lower than the first injection molding temperature.

In an optional implementation, the first mechanical part is the tip, and the second mechanical part is the mounting housing.

According to a third aspect, this application provides a composite material used to prepare a tip. The composite material is conductive plastic, Shore hardness of the composite material is 75A to 95A, conductivity of the composite material is 10^{2.5} Ω to 10^{7.9} Ω, and damping force of the tip is 0.5 N to 1.5 N.

In an implementation, the composite material may include a base material and a conductive agent. A mass proportion of the conductive agent in the composite material is 10 wt% to 30 wt%. The base material includes at least one of a thermoplastic polyurethane elastomer, an acrylonitrile butadiene styrene copolymer, and polyformaldehyde. The conductive agent includes at least one of polyethylene terephthalate conductive fiber, carbon fiber, super conductive carbon black, a carbon nanotube, and indium tin oxide.

According to a fourth aspect, this application provides a stylus, including a stylus body, a stylus core, and the tip of this application. The stylus core is disposed in the stylus body, the mounting housing of the tip is connected to the stylus body, the writing part of the tip is electrically connected to the stylus core, and the stylus core is configured to generate an electrical signal.

The stylus core is connected to the tip, and the stylus core is configured to generate an electrical signal. The electrical signal generated by the stylus core is directly transmitted to the tip, and a writing surface of the tip is coupled to and in contact with a touchscreen. In this process, the writing surface is in direct contact with the touchscreen, so that a charge loss is reduced, and a signal value is large. Therefore, higher writing accuracy can be implemented.

For technical effects that may be implemented in the second aspect and the fourth aspect, refer to corresponding effect descriptions in the first aspect. Details are not described herein again.

For data in the foregoing possible implementations of this application, for example, data such as the Shore hardness of the tip, the conductivity of the tip, the damping force of the tip, and the mass proportion of the conductive agent, during measurement, a value within an engineering measurement error range should be understood as falling within a range limited in this application.

### BRIEF DESCRIPTION OF DRAWINGS

FIG. 1 is an existing diagram of a structure of a tip;
FIG. 2 is a diagram of a structure of a stylus according to an embodiment of this application;
FIG. 3 is a diagram of a structure of a tip assembly according to an embodiment of this application;
FIG. 4 is a diagram of a split structure of a tip assembly according to an embodiment of this application;
FIG. 5 is a diagram of a structure of a tip assembly according to an embodiment of this application;
FIG. 6 is a diagram of a structure of a tip assembly according to an embodiment of this application;
FIG. 7 is a diagram of a structure of a tip assembly according to an embodiment of this application;
FIG. 8 is a diagram of a structure of a tip assembly according to an embodiment of this application;
FIG. 9 is a diagram of a structure of a tip assembly according to an embodiment of this application;
FIG. 10 is a diagram of a structure of a tip assembly according to an embodiment of this application; and
FIG. 11 is a diagram of a cross-sectional structure of a stylus according to an embodiment of this application.

### Reference numerals:

10: tip assembly; 11: mounting housing; 111: first mounting hole; 112: second mounting hole; 113: cavity; 114: first end surface;
12: tip; 121: writing part; 122: connection part; 123: writing surface; 124: second end surface; 125: positioning member; and
20: stylus body; 30: stylus core; 40: conductive connector; 41: pin (pin); 101: outer coating layer; and 102: inner conductive electrode.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. Terms "one", "a", "the foregoing", "the", and "the one" of singular forms used in this specification and the appended claims of this application are also intended to include plural forms, for example, "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

With development of touch technologies, many electronic apparatuses may be used with a stylus for touch input. The stylus is a pen-shaped input tool, is an input apparatus of an electronic device, and is configured to input an instruction to a device having a touchscreen, for example, a computer screen, a mobile device, or a drawing board. A user may tap the touchscreen through the stylus for file selection and drawing. FIG. 2 is a diagram of a structure of a stylus. As shown in FIG. 2, the stylus generally includes components such as a stylus body 20, a stylus core 30, and a tip assembly 10, and may further include components such as a battery, an antenna, and a touch panel (not shown in the figure). The stylus core 30 is disposed in the stylus body 20, and may be configured to generate an electrical signal, for example, a charge.

FIG. 3 is a diagram of a structure of a tip assembly. As shown in FIG. 3, the tip assembly 10 includes a mounting housing 11 and a tip 12. The mounting housing 11 is configured to fasten the tip 12. Refer to FIG. 2. The mounting housing 11 is connected to the stylus body 20 of the stylus. The stylus core 30 is electrically connected to the tip 12, and transmits an electrical signal to the tip 12. The tip 12 couples the electrical signal to a touchscreen. The touchscreen positions the stylus based on a signal value of coupling, to implement functions such as file selection and drawing.

The following separately describes the mounting housing of the tip assembly and the structure of the tip.

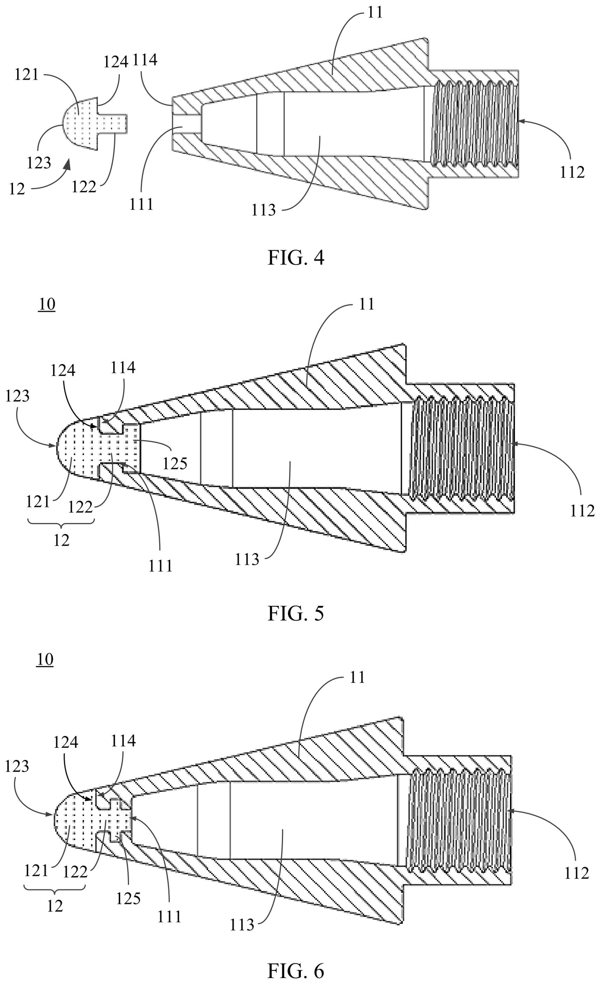

FIG. 4 is a diagram of a disassembled structure of the tip and the mounting housing according to an embodiment. As shown in FIG. 3 and FIG. 4, an appearance of the mounting housing 11 may be a cone-like structure surface. In an axial direction of the mounting housing 11, one end of the mounting housing 11 is provided with a first mounting hole 111, and the other end of the mounting housing 11 is provided with a second mounting hole 112. A diameter of the first mounting hole 111 may be less than a diameter of the second mounting hole 112. The first mounting hole 111 and the second mounting hole 112 are provided opposite to each other, and a cavity 113 is provided between the first mounting hole 111 and the second mounting hole 112. Both the first mounting hole 111 and the second mounting hole 112 communicate with the cavity 113. The cavity 113 may be configured to accommodate the stylus core. The first mounting hole 111 of the mounting housing 11 may be configured to connect to the tip 12, and may also be configured to penetrate through the stylus core, so that the stylus core penetrates through the first mounting hole 111 and is electrically connected to the tip 12. The second mounting hole 112 is configured to connect to the stylus body 20. The second mounting hole 112 may be connected to the stylus body 20 through clamping, threaded connection, interference fit, or the like.

Because the mounting housing 11 plays a role of mounting and fastening the tip 12, the mounting housing 11 has specific hardness and needs to be insulated from the tip 12. Therefore, the mounting housing 11 may be prepared by using a plastic material whose Shore hardness is greater than or equal to 85D. In an optional embodiment, a material for forming the mounting housing 11 includes polycarbonate (polycarbonate, PC) or a combination of polycarbonate and an acrylonitrile butadiene styrene (acrylonitrile butadiene styrene, ABS) copolymer.

As shown in FIG. 4, the mounting housing 11 has a first end surface 114, and the first end surface 114 may be in contact with or abut against the tip 12. Refer to FIG. 3 together. The tip 12 includes a writing part 121, and the writing part 121 is provided with a second end surface 124 and a writing surface 123. The second end surface 124 is a surface connected to the first end surface 114. The first end surface 114 and the second end surface 124 may be planes, or may be curved surfaces. Specific structures and a connection relationship of the first end surface 114 and the second end surface 124 are described below.

As shown in FIG. 3 and FIG. 4, in this embodiment of this application, the writing surface 123 is a convex arc surface. The second end surface 124 of the writing part 121 is used as a reference. The writing surface 123 protrudes from the second end surface 124 in a direction away from the mounting housing 11, to form a convex arc surface, for example, a parabolic surface, a sphere-like surface, or a spherical surface. The convex arc surface is used as the writing surface 123, so that writing can be performed at each angle without damaging the touchscreen. The writing part 121 may be of a mushroom head structure or a spherical cap structure, and may be of a hollow structure or a solid structure. When the writing part 121 is of a hollow structure, a wall thickness of the writing part 121 may be greater than or equal to 2 mm, to improve wear resistance of the writing part 121.

During writing, because the tip 12 needs to be in contact with the touchscreen to implement a writing function, hardness of the tip 12 is less than hardness of the mounting housing 11. The tip 12 may be prepared and formed by using a material whose Shore hardness is greater than or equal to 75A and less than or equal to 95A. When the Shore hardness of the tip 12 is less than 75A, the writing part 121 is too soft, and a writing distance is short. When the hardness of the tip 12 is greater than 95A, the writing part 121 is difficult to demold, and has poor direct bonding force with the mounting housing 11.

In addition, the tip 12 in this embodiment of this application has a conductive function, and when in contact with the touchscreen, the tip 12 may directly couple an electrical signal to the touchscreen. Therefore, the tip 12 may be prepared and formed by using conductive plastic.

In addition to low hardness, a conductive plastic material for forming the tip 12 further needs to have high electrical conductivity and appropriate damping force, to meet a writing experience requirement. The electrical conductivity of the tip 12 meets 10^{2.5} Ω to 10^{7.9} Ω, and the damping force meets 0.5 N to 1.5 N.

For example, the conductive plastic may include a base material and a conductive agent, and the conductive agent is dispersed in the base material. The base material may be selected from at least one of thermoplastic polyurethane (thermoplastic urethane, TPU) elastomer, acrylonitrile butadiene styrene (acrylonitrile butadiene styrene, ABS) copolymer, and polyformaldehyde (polyformaldehyde, POM). The conductive agent includes at least one of a polyethylene terephthalate (polyethylene terephthalate, PET) conductive fiber, carbon fiber, super conductive carbon black, a carbon nanotube, and indium tin oxide (indium tin oxide, ITO). It may be understood that, to implement a connection between the tip 12 and the mounting housing 11, when materials of the tip 12 and the mounting housing 11 are selected, materials that have good connection compatibility, similar thermal expansion coefficients, and similar shrinkage rates need to be selected.

For example, a mass proportion of the conductive agent in the tip 12 may be 10 wt% to 30 wt%. When the mass proportion of the conductive agent is 10wt % to 30 wt%, a value of a signal conducted from the tip 12 to the electronic device remains basically unchanged. However, as a content of the conductive agent increases, a content of the base material decreases, and the base material provides main writing damping force in the writing part 121. The decrease of the content of the base material causes a decrease of friction resistance of the writing part 121, and a sense of writing experience is poor. Therefore, a proportion of the conductive agent needs to be within an appropriate range.

Refer to FIG. 3 and FIG. 4. In addition to the writing part 121, the tip 12 may further include a connection part 122. Both the connection part 122 and the writing part 121 may be prepared by using same conductive plastic, to form an integrated connection structure. One end of the connection part 122 is connected to the writing part 121, and the other end of the connection part 122 is configured to connect to the mounting housing 11. For example, the connection part 122 may penetrate through the first mounting hole 111 to implement a connection to the mounting housing 11. As shown in FIG. 3, the connection part 122 may include a connection pillar. The connection pillar is inserted into the first mounting hole 111 and is in interference fit with the first mounting hole 111, so that the connection part 122 is fastened to the mounting housing 11. In addition to interference fit, the connection pillar may be connected to the first mounting hole 111 through bonding or threaded connection. A specific connection form between the connection pillar and the first mounting hole 111 is not limited.

FIG. 5 is a diagram of a structure of the tip assembly according to an embodiment. FIG. 6 is a diagram of a structure of the tip assembly according to an embodiment. As shown in FIG. 5 and FIG. 6, different from that in the embodiment shown in FIG. 3, the connection part 122 may further include a positioning member 125 fastened to the connection pillar. The positioning member 125 is connected to a partial housing of the mounting housing 11, to increase connection strength between the connection part 122 and the mounting housing 11.

As shown in FIG. 5, the positioning member 125 may be a positioning sheet disposed at one end of the connection pillar. The positioning sheet is disposed outside the first mounting hole 111 and is disposed in the cavity 113 of the mounting housing 11, and a diameter of the positioning sheet is greater than a diameter of the first mounting hole 111, to block the first mounting hole 111, so that the positioning sheet is always fastened in the cavity 113, and detachment between the connection pillar and the first mounting hole 111 is avoided.

In another embodiment, as shown in FIG. 6, the positioning member 125 is a positioning ring disposed on a circumferential side surface of the connection pillar. The positioning ring is an annular protrusion formed by protruding outward from a part of the circumferential side surface of the connection pillar. An inner wall of the first mounting hole 111 is provided with an annular groove matching the annular protrusion, and the annular protrusion is disposed in the annular groove and is connected to the annular groove through fitting, so that the positioning ring is fastened in the annular groove inside the first mounting hole 111. In the connection structure, the positioning ring is connected to the mounting housing at a hole wall of the first mounting hole 111, to form an anti-detachment mechanical part of the connection pillar, so as to increase the connection strength between the connection pillar and the mounting housing 11.

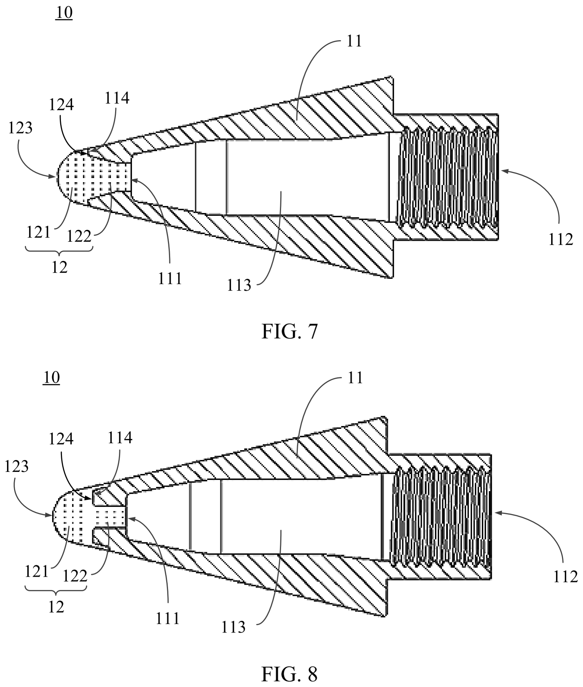

The connection pillar may be of a cylindrical structure, may be of a truncated cone structure, or may be of a combination structure of a cylinder and a truncated cone. As shown in FIG. 4, in an optional embodiment, the connection pillar is of a cylindrical structure. Correspondingly, the first mounting hole 111 is a cylindrical hole. FIG. 7 is a diagram of a structure of the tip according to another embodiment. As shown in FIG. 7, the connection pillar is of a truncated cone structure. In a direction from the writing part 121 to the connection pillar, a radial size of the connection pillar gradually decreases.

In the structures shown in FIG. 3 to FIG. 7, in addition to being connected to the mounting housing 11 through the connection part 122, the tip 12 may be connected to the mounting housing 11 through the writing part 121. A surface that is on a side of the writing part 121 and that is configured to connect to the connection part 122 may be connected to a surface that is of the mounting housing 11 and that is provided with the first mounting hole 111. An end surface that is on a side of the mounting housing 11 and that faces the writing part 121 is denoted as a first end surface 114, and an end surface that is on a side of the writing part 121 and that faces the mounting housing 11 is denoted as a second end surface 124. The first end surface 114 and the second end surface 124 are attached and in contact connection, for example, bonded or crimped to each other.

With reference to FIG. 3 to FIG. 7, both the first end surface 114 and the second end surface 124 may be of plane structures, and the first end surface 114 and the second end surface 124 are connected to each other through pressing. For example, connection through pressing may be implemented in an injection molding process.

In a writing process, force applied by the touchscreen to the writing part 121 of the tip 12 is transmitted to the first end surface 114 of the mounting housing 11 through the second end surface 124 of the writing part 121. Therefore, there is interaction force between the first end surface 114 and the second end surface 124. When the force is large, bonding force between the first end surface 114 and the second end surface 124 may be reduced, and even relative displacement may occur between the first end surface 114 and the second end surface 124. To increase the bonding force between the first end surface 114 and the second end surface 124, and avoid relative sliding of the first end surface 114 and the second end surface 124 along a bonding surface, the first end surface 114 and the second end surface 124 may be of non-plane structures.

FIG. 8 is a diagram of a structure of the tip assembly according to an embodiment. As shown in FIG. 8, the first end surface 114 includes a plane segment and a curved surface segment, and the second end surface 124 also includes a plane segment and a curved surface segment. The first end surface 114 is attached to the second end surface 124. The plane segment of the first end surface 114 is attached to the plane segment of the second end surface 124, and the curved surface segment of the first end surface 114 is attached to the curved surface segment of the second end surface 124. If the curved surface segment of the first end surface 114 is a convex surface, the curved surface segment of the second end surface 124 is a concave surface. If the curved surface segment of the second end surface 124 is a concave surface, the curved surface segment of the first end surface 114 is a convex surface.

As shown in FIG. 8, the curved surface segment of the second end surface 124 of the writing part 121 may be disposed at an edge of the second end surface 124. The curved surface segment may be an annular flange formed along the edge of the second end surface 124. An area between the annular flange and the connection pillar may be a plane segment. Correspondingly, the curved surface segment of the first end surface 114 of the mounting housing 11 may be located at an edge of the first end surface 114. The curved surface segment is an annular groove disposed along the edge of the first end surface 114. The annular flange and the annular groove are connected with each other through fitting. When sliding force in a direction of the bonding surface is generated between the first end surface 114 and the second end surface 124, disposing of the annular flange and the annular groove can avoid movement between the annular flange and the annular groove, to increase the bonding strength between the first end surface 114 and the second end surface 124.

It may be understood that the curved surface segment of the second end surface 124 may alternatively be a convex tooth disposed on the second end surface 124. Correspondingly, the first end surface 114 is provided with a groove fitting the convex tooth. The convex tooth may be inserted into the groove, to implement an engagement structure between the first end surface 114 and the second end surface 124.

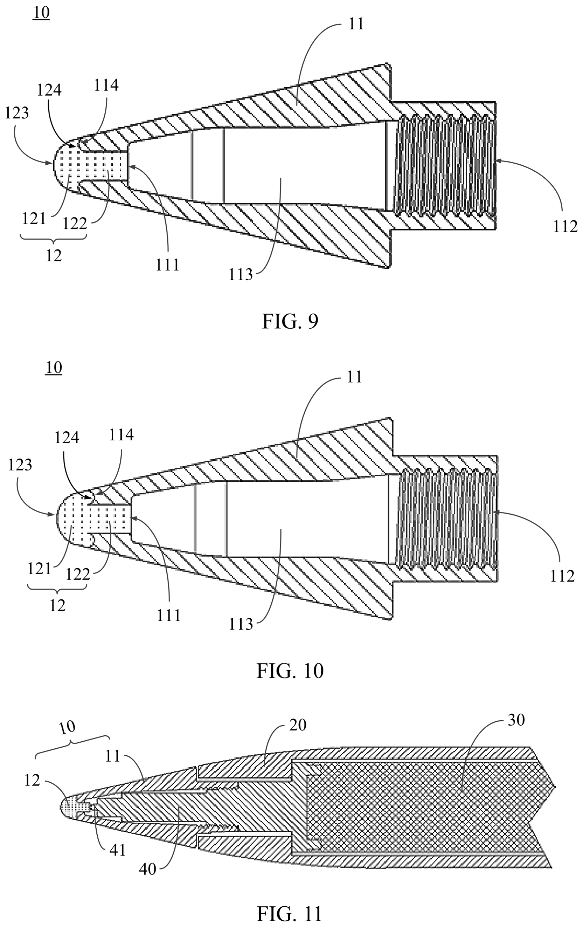

FIG. 9 is a diagram of a structure of the tip assembly according to another embodiment. FIG. 10 is a diagram of a structure of the tip assembly according to another embodiment. As shown in FIG. 9 and FIG. 10, in the structure of the tip 12, both the first end surface 114 and the second end surface 124 are curved surfaces.

Refer to FIG. 9. The first end surface 114 is a convex curved surface protruding toward the writing part 121. Correspondingly, the second end surface 124 is a concave curved surface fitting the convex curved surface. The convex curved surface of the first end surface 114 and the concave curved surface of the second end surface 124 fit with each other, to form an engagement structure of concave-convex fitting.

Refer to FIG. 10. The first end surface 114 is a concave curved surface. Correspondingly, the second end surface 124 is a convex curved surface protruding toward the mounting housing 11. The concave curved surface of the first end surface 114 and the convex curved surface of the second end surface 124 fit with each other, to form an engagement structure of concave-convex fitting.

In addition, when both the first end surface 114 and the second end surface 124 are curved surfaces, the first end surface 114 and the second end surface 124 may be wave-shaped curved surfaces. For example, the first end surface 114 is a first wave-shaped curved surface, and the second end surface 124 is a second wave-shaped curved surface fitting the first wave-shaped curved surface. In addition, the first end surface 114 and the second end surface 124 may be of other irregular curved surface connection structures or multi-segment plane connection structures, to implement engagement between the first end surface 114 and the second end surface 124.

As described above, when the first end surface 114 and the second end surface 124 are of non-plane connection structures, the engagement structure may be formed between the first end surface 114 and the second end surface 124. When force is generated between the first end surface 114 and the second end surface 124, the non-plane connection structure may disperse stress between the first end surface 114 and the second end surface 124 in a plurality of directions, to avoid sliding between the first end surface 114 and the second end surface 124.

Based on a same technical objective, this application further provides a preparation method for the tip assembly. The preparation method includes the following steps.

S11: Place, in a first injection mold, a first injection molding material used to form a first mechanical part, and form the first mechanical part through injection molding at a first temperature.

S12: Place, in a second injection mold, the first mechanical part and a second injection molding material used to form a second mechanical part, and form the tip assembly through injection molding at a second temperature, where the first mechanical part is one of the tip or the mounting housing, and the second mechanical part is the other of the tip or the mounting housing.

A melting point of the first injection molding material is 30°C to 80°C higher than a melting point of the second injection molding material, and the second injection molding temperature is lower than the first injection molding temperature.

For example, the first mechanical part is the tip, and the second mechanical part is the mounting housing. The preparation method for the tip assembly in this embodiment of this application includes the following steps.

S11: Place, in a first injection mold, a first injection molding material used to form the tip 12, and form the tip 12 through injection molding at a first temperature.

S12: Place, in a second injection mold, the tip 12 and a second injection molding material used to form the mounting housing 11, and form the mounting housing 11 on an outer layer of the tip 12 through injection molding at a second temperature, to obtain the tip assembly, where a melting point of the first injection molding material is 30°C to 80°C higher than a melting point of the second injection molding material, and the second injection molding temperature is lower than the first injection molding temperature.

In the above injection molding process, if the melting point of the first injection molding material is lower than the melting point of the second injection molding material, the structure of the tip has collapsed when injection molding is performed for the second time. In this case, an effective connection between the tip and the mounting housing cannot be implemented. Therefore, the melting point of the first injection molding material needs to be higher than the melting point of the second injection molding material, so that the tip can be softened to some extent at the second injection molding temperature, and therefore can be bonded to the second injection molding material at the second injection molding temperature. In this way, there is specific connection strength between the tip and the mounting housing. However, if a difference between the melting point of the first injection molding material and the melting point of the second injection molding material is too small, for example, less than 30°C, the tip formed by the first injection molding material is prone to excessive softening or melting at the second injection molding temperature, and cannot maintain the original structure. If a difference between the melting point of the first injection molding material and the melting point of the second injection molding material is too large, for example, greater than 80°C, the tip cannot be softened when injection molding is performed for the second time. This affects fusion-bonding of the tip and the mounting housing, and decreases the connection strength between the tip and the mounting housing.

The following further describes the tip assembly of this application in detail with reference to specific embodiments and comparative examples.

### Embodiment 1

In the tip assembly in this embodiment, the mounting housing is made of PC with Shore hardness of 90D. The tip is of a combination of TPU and carbon fiber. Content of TPU is 70 wt%, and Shore hardness of TPU is 75A. Content of carbon fiber is 30 wt%, and Mohs hardness of carbon fiber is 5 to 5.5.

### Embodiment 2

In the tip assembly in this embodiment, the mounting housing is made of PC with Shore hardness of 90D. The tip is of a combination of TPU and carbon fiber. Content of TPU is 80 wt%, and Shore hardness of TPU is 75A. Content of carbon fiber is 20 wt%, and Mohs hardness of carbon fiber is 5 to 5.5.

### Embodiment 3

In the tip assembly in this embodiment, the mounting housing is made of PC with Shore hardness of 90D. The tip is of a combination of TPU and carbon fiber. Content of TPU is 90 wt%, and Shore hardness of TPU is 75A. Content of carbon fiber is 10 wt%, and Mohs hardness of carbon fiber is 5 to 5.5.

### Comparative example 1

A structure of the tip assembly in this comparative example is shown in FIG. 1, and includes an inner conductive electrode 102 and an outer coating layer 101. The inner conductive electrode 102 is a metal electrode. The outer coating layer 101 is of TPU. A thickness of the outer coating layer 101 is 0.3 mm.

Signal values, writing lives, and writing resistance of the tip in different embodiments and comparative examples are separately tested. Test results are listed in Table 1.

A method for testing a signal value is as follows: reading the signal value on a tablet end when electronic pen vertically draws a line on the tablet end at force of 100 g and a speed of 5 mm/s.

A method for testing a writing life is as follows: When the electronic pen is used to vertically draw the line on a tablet end at force of 200 g and a speed of 150 mm/s, a tip function is normal, and no bending, cracking, hardening, or detachment occurs.

A method for testing writing resistance is as follows: testing resistance of the tip when the electronic pen is used to vertically draw a line on the tablet end at force of 150 g and a speed of 50 mm/s.

**Table 1**

| **Number** | **Signal value** | **Writing life** | **Writing resistance** |
|---|---|---|---|
| Embodiment 1 | 6520 | 20,000 meters | 1.38 N |
| Embodiment 2 | 6571 | 10,000 meters | 1.21 N |
| Embodiment 3 | 6763 | 5,000 meters | 1.46 N |
| Comparative example 1 | 2677 | 20,000 meters per three electronic pens | 0.6 N |

It can be learned from the test data in Table 1 that the tip in this embodiment of this application is prepared by using a conductive material, and can be made into a solid writing part of any thickness based on a requirement, and a thickness of the writing part does not need to be considered. Therefore, the writing part in this application is no longer limited by the thickness, to significantly prolong a writing life of the writing part. In addition, the tip is directly a conductive electrode, and is in direct contact with the touchscreen in a writing process to perform charge coupling, and there is no signal loss in a coupling process. Therefore, the tip in Embodiment 1 to Embodiment 3 of this application has a signal value far greater than that of the tip in Comparative example 1, has a writing life basically three times that of the tip in Comparative example 1, and has writing resistance significantly improved, to help improve writing experience.

Based on a same technical objective, this application further provides a composite material used to prepare the tip. The composite material is conductive plastic, and has hardness of 75A to 95A, conductivity of 10^{2.5} Ω to 10^{7.9} Ω, and damping force of 0.5 N to 1.5 N. The composite material includes a base material and a conductive agent, and a mass proportion of the conductive agent in the composite material is 10 wt% to 30 wt%. The base material includes at least one of a thermoplastic polyurethane elastomer, an acrylonitrile butadiene styrene copolymer, and polyformaldehyde. The conductive agent includes at least one of polyethylene terephthalate conductive fiber, carbon fiber, super conductive carbon black, a carbon nanotube, and indium tin oxide.

Based on a same technical objective, this application further provides a stylus. FIG. 11 is a diagram of a cross-sectional structure of the stylus. As shown in FIG. 11, the stylus includes a stylus body 20, a stylus core 30, and the tip assembly 10 in this application. The stylus core 30 is disposed in the stylus body 20, the mounting housing 11 of the tip assembly 10 is connected to the stylus body 20, the writing part of the tip 12 is electrically connected to the stylus core 30, and the stylus core 30 is configured to generate an electrical signal.

The stylus core 30 and the tip 12 may be directly electrically connected, or may be electrically connected through a conductive connector. As shown in FIG. 11, the stylus further includes a conductive connector 40. The conductive connector 40 is disposed in the cavity enclosed by the mounting housing 11. The stylus core 30 and the tip 12 may be electrically connected through the conductive connector 40. The conductive connector 40 is a metal component, one end of the conductive connector 40 is connected to the stylus core 30, and the other end of the conductive connector 40 is connected to the tip 12. A pin 41 may be disposed at one end that is of the conductive connector 40 and that is connected to the tip 12, and the pin 41 is connected to, for example, abuts against, the tip 12. Refer to both FIG. 3 and FIG. 11. When the tip 12 includes the writing part and the connection part, the connection part 122 penetrates through the first mounting hole 111 and abuts against the pin 41 of the conductive connector 40, and the other end of the conductive connector 40 is connected to the stylus core 30. The electrical signal generated by the stylus core 30 may be conducted to the tip 12 through the conductive connector 40.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A tip assembly, wherein the tip assembly is used in a stylus, and the stylus is an input apparatus of an electronic device, and comprises:
a mounting housing, wherein the mounting housing is an insulated housing and is provided with a first end surface and a first mounting hole, and the first mounting hole penetrates through the housing from the first end surface; and
a tip, wherein the tip is made of conductive plastic, the tip comprises a writing surface and a second end surface that are disposed opposite to each other, the writing surface is a convex arc surface used for writing, and the second end surface is disposed facing the first end surface and is connected to the first end surface, wherein
the tip blocks the first mounting hole, and hardness of the tip is less than hardness of the mounting housing.

2. The tip assembly according to claim 1, wherein both the first end surface and the second end surface are planes, and the first end surface and the second end surface are connected to each other through pressing or are bonded to each other.

3. The tip assembly according to claim 1 or 2, wherein the first end surface and the second end surface each comprise a plane segment and a curved surface segment, and the first end surface and the second end surface are engaged with each other through the plane segments and the curved surface segments.

4. The tip assembly according to claim 1 or 2, wherein both the first end surface and the second end surface are curved surfaces, the first end surface is a concave curved surface, and the second end surface is a convex curved surface connected to the concave curved surface through fitting; or
the first end surface is a convex curved surface, and the second end surface is a concave curved surface connected to the convex curved surface through fitting; or
the first end surface is a first wave-shaped curved surface, and the second end surface is a second wave-shaped curved surface fitting the first wave-shaped curved surface.

5. The tip assembly according to any one of claims 1 to 4, wherein the tip comprises a writing part and a connection part, the connection part is connected to the writing part, the connection part penetrates through the first mounting hole and is electrically connected to a stylus core of the stylus, and the writing part is disposed outside the mounting housing.

6. The tip assembly according to claim 5, wherein the connection part comprises a connection pillar, and the connection pillar and the first mounting hole are in interference fit, are bonded to each other, or are in threaded connection.

7. The tip assembly according to claim 5, wherein the connection part comprises a connection pillar and a positioning member connected to the connection pillar, and the positioning member is connected to a partial housing of the mounting housing.

8. The tip assembly according to claim 7, wherein the positioning member is a positioning sheet, the positioning sheet is fastened to an end that is of the connection pillar and that is away from the writing part, and is disposed outside the first mounting hole, and a radial size of the positioning sheet is greater than a diameter of the first mounting hole.

9. The tip assembly according to claim 7, wherein the positioning member is a positioning ring, the positioning ring is an annular protrusion formed by protruding outward from a part of a circumferential side surface of the connection pillar, an inner wall of the first mounting hole is provided with an annular groove that matches the annular protrusion, and the annular protrusion is disposed in the annular groove and is connected to the annular groove through fitting.

10. The tip assembly according to any one of claims 5 to 9, wherein the connection part is of a cylindrical structure.

11. The tip assembly according to any one of claims 5 to 9, wherein the connection part is of a truncated cone structure, and an outer diameter of the connection pillar gradually decreases in a direction from the writing part to the connection part.

12. The tip assembly according to any one of claims 1 to 11, wherein Shore hardness of the tip is 75A to 95A, conductivity of the tip is 10^{2.5} Ω to 10^{7.9} Ω, and damping force of the tip is 0.5 N to 1.5 N.

13. The tip assembly according to any one of claims 1 to 12, wherein a material for forming the tip comprises a base material and a conductive agent, and a mass proportion of the conductive agent in the tip is 10 wt% to 30 wt%; and
the base material comprises at least one of a thermoplastic polyurethane elastomer, an acrylonitrile butadiene styrene copolymer, and polyformaldehyde, and the conductive agent comprises at least one of polyethylene terephthalate conductive fiber, carbon fiber, super conductive carbon black, a carbon nanotube, and indium tin oxide.

14. The tip assembly according to any one of claims 1 to 13, wherein a connection surface between the tip and the mounting housing is a fusion-bonding surface.

15. A preparation method for the tip assembly according to any one of claims 1 to 14, comprising:
placing, in a first injection mold, a first injection molding material used to form a first mechanical part, and forming the first mechanical part through injection molding at a first temperature; and
placing, in the second injection mold, the first mechanical part and a second injection molding material used to form a second mechanical part, and forming the tip assembly through injection molding at a second temperature, wherein the first mechanical part is one of the tip or the mounting housing, the second mechanical part is the other of the tip or the mounting housing, a melting point of the first injection molding material is 30°C to 80°C higher than a melting point of the second injection molding material, and the second injection molding temperature is lower than the first injection molding temperature.

16. A composite material for a tip of a stylus, wherein the composite material is conductive plastic, Shore hardness of the composite material is 75A to 95A, conductivity of the composite material is 10^{2.5} Ω to 10^{7.9} Ω, and damping force of the tip made of the composite material is 0.5 N to 1.5 N.

17. The composite material according to claim 16, wherein the composite material comprises a base material and a conductive agent, a mass proportion of the conductive agent in the composite material is 10 wt% to 30 wt%, the base material comprises at least one of a thermoplastic polyurethane elastomer, an acrylonitrile butadiene styrene copolymer, and polyformaldehyde, and the conductive agent comprises at least one of polyethylene terephthalate conductive fiber, carbon fiber, super conductive carbon black, a carbon nanotube, and indium tin oxide.

18. A stylus, comprising a stylus body, a stylus core, and the tip assembly according to any one of claims 1 to 14, wherein the stylus core is disposed in the stylus body, a mounting housing of the tip assembly is connected to the stylus body, the writing part of the tip is electrically connected to the stylus core, and the stylus core is configured to generate an electrical signal.
